# EUROPEAN PATENT APPLICATION

(11) **EP 4 485 723 A1**
(43) Date of publication of application: **01.01.2025**
(21) Application number: 24184699.7
(22) Date of filing: 26.06.2024
(51) Int. Cl.: H02G 3/08, H02G 3/14, H02G 3/22, H02S 40/34

(54) **A ROOF TERMINAL OF A CABLE DUCT FEEDING CABLES THROUGH A ROOF, SAID ROOF AND A METHOD FOR INSTALLING A CABLE THROUGH A ROOF USING SAID TERMINAL**

(30) Priority: 27.06.2023 NL 2035184
(71) Applicant: EBS European Building Supply B.V., 1689 ZX Zwaag (NL)
(72) Inventor: LOOMANS, Kevin Fabian, Zwaag (NL); VAN DEN BIGGELAAR, Rens Cornelis Wilhelmus, 1689 ZX Zwaag (NL)
(74) Representative: Leeger, Ferdinand Christiaan

(57) **Abstract**

The inlet terminal for a cable duct for feeding electrical cables from solar panels through a roof comprising a plurality of cable ports for receiving electrical cables therein, characterized in that each port of the plurality cable ports comprises at least one manually removable breakaway portion for shielding an opening of said port.

## Description

In recent years, there has been a significant surge in the demand for solar panels on existing roofs, driven by several factors aligned with the global energy transition and the growing emphasis on sustainability. This trend is fueled by a combination of environmental consciousness, economic incentives, and technological advancements, all working together to make solar panels an attractive choice for homeowners and businesses alike.

First and foremost, the increasing demand for solar panels on existing roofs is a direct response to the urgent need to transition towards cleaner and more sustainable sources of energy. As the world grapples with the challenges of climate change and the depletion of traditional energy resources, there is a growing recognition that renewable energy solutions, such as solar power, play a crucial role in reducing greenhouse gas emissions and mitigating the impacts of global warming. By harnessing the power of the sun, solar panels enable individuals and organizations to generate electricity in a clean, emissions-free manner, thereby contributing to a greener future.

Moreover, integrating solar panels on existing roofs signifies a commitment to sustainable practices. It allows individuals and businesses to reduce their carbon footprint by producing their own clean energy, thereby contributing to a more environmentally friendly and sustainable energy ecosystem.

Another driving force behind the increasing demand for solar panels on existing roofs is the availability of various financial incentives and support mechanisms. Governments and local authorities across the world are implementing policies and programs to promote renewable energy adoption, offering incentives such as tax credits, feed-in tariffs, and net metering. These financial benefits make solar panel installations more affordable and financially viable for homeowners and businesses, accelerating the uptake of solar energy and driving the demand for solar panels on existing roofs.

Furthermore, advancements in solar technology have made panels more efficient, affordable, and aesthetically pleasing. Innovations in photovoltaic materials, panel design, and installation techniques have improved the performance and durability of solar panels, while reducing their overall costs. As a result, installing solar panels on existing roofs has become a practical and visually appealing option for individuals and businesses seeking to embrace sustainable energy solutions.

Providing electrical power lines through pre-existing roofs can pose challenges and potentially lead to roof leakage issues though. When installing power lines through a roof, several factors can contribute to the risk of leakage.

For example, creating openings or holes in the roof to accommodate power lines can weaken the roof's protective barrier. If not properly sealed or waterproofed, these penetrations can become potential entry points for water, leading to leakage issues.

To combat this issue ducts are usually provided with a cover. Such covers are usually generic covers which allow a cable to extend thereunder into the cable duct, provided within a through hole in a roof, which itself extends through the roof.

In some cases the cover is itself provided over a through hole in the rood without a duct, such as a plastic pipe. These covers are also called "*Roof Wire Entry Glands*". An example is provided herein below: https://web.archive.org/web/20230621120656/https://www.fruugo. nl/roof-wire-entry-gland-box-solar-panel-cable-motorhome-caravan-boat-a/p-116288762-244223408?language=en&ac=ProductCasterAPI&asc=pmax#

These glands are basically just a cover with a plurality of cable ports and may leak around the edges. They are furthermore poorly suited for undulated roof portions. Additionally, even if properly sealed, the cable ports, do allow for the incursion of some water.

The present invention aims to address these issues or at least provide a useful alternative. In particular the invention aims to provide easy to use cable inlet terminal for feeding electrical cables through the roof of a building via a cable duct which provides added protection from rain water.

According to a first aspect of the invention there is provided an inlet terminal for a cable duct for feeding uninterrupted electrical cables from solar panels through a roof, comprising a plurality of cable ports for receiving electrical cables therein, characterized in that each port of the plurality cable ports comprises at least one manually removable breakaway portion for shielding an opening of said port. This beneficially keeps openings for cables shielded against the environment. A user would use his or her finger, or a screwdriver, to poke the covers inwardly thus freeing up the opening for passing a cable through. In such a case the user only needs to open the cable ports he or she intends to use. This expedites work enormously, as no plugs need to be added to redundant openings after the fact. It stands to reason that feeding electrical cables from solar panels through a roof here means that the cable is one uninterrupted piece going into and coming out of the terminal through the roof.

To enhance the fire safety of the terminal it is highly desirable to prevent any unnecessary pinching of electrical cables by electrically conductive elements. To this end the terminal may in each embodiment be provided without, that is to say entirely free of, any electrical connection portions, such as between a lower portion and a cover of the terminal in those embodiments in which a lower portion and cover are present.

In one example the terminal may comprise a hollow base, defining an internal volume, such as for being placed over the inlet duct, and/or for connecting the terminal to said roof and a head for shielding the internal volume of the hollow base against rain and for guiding the cables. One may place the hollow base over a duct so as to provide an additional barrier around the duct itself. Such a base and duct may each be provided with flanges by which the base can be fastened to the duct through the roof, or through a tile of a roof. In a further example the hollow base may itself be provided as a portion of a duct assembly, such as a bus duct.

Optionally, the head comprises a cover and a lower portion for being assembled to form said head, wherein the plurality of cable ports comprise cable gutters furnished on an upper face of the lower portion, preferably only on said upper face of the lower portion. This allows inspection without the need to disassemble components attached to the roof directly, which might otherwise further increase the risk of roof leakage. Additionally, if the cable gutters are only furnished on the upper face of the lower portion, and therefore not also on the lower face of the head, the cables may be allowed to dissipate heat better.

In a preferred embodiment the at least one breakaway portion comprises a first portion integral with the cover, and a second portion integral with the lower portion. This may allow the port to be opened partially if needed, allowing for a greater variety in cable thicknesses that can fit into the head while keeping the interior shielded.

To promote simultaneous breaking of the first and second portions, the cover and lower portion may be designed to form a plane of connection, wherein this plane divides the breakaway portion such that the first portion and second portion are substantially equal halves, preferably half circles as this is easier on the cables. The term breakaway portion, is to be understood as a portion that is designed for being broken off from the rest of the terminal, such as a lip or tab.

Beneficially the upstanding edges of the first and second portions are designed to meet when the cover and lower portion are assembled to form the head. This ensures that an unused breakaway portion keeps rain water out. The cover and lower portions can comprises threaded portions which allows screws to fasten the cover to the lower portion. The lower portion may in turn be screw fastened to the base. A snap fit may alternatively be provided for any of these components, so that assembly is even more rapid.

Optionally, the breakaway portion may be provided 0,5-5 mm into the inlet of said port, with respect to an outer contour of said port, so as to prevent breaking by accidental external pressure during transport. Beneficially, this design allows the breakaway portion to be somewhat shielded from random bumps, but not shielded from intentionally directed forces, such as that of in inward pushing finger or screw driver handle.

In order to prevent shards from protruding into the opening of a port, which could be problematic for a cable, the manually removable breakaway portion may comprise a recess, such as a curved recess, so as to promote breaking of the breakaway portion precisely along at least a portion of the inner contour of the corresponding cable port, such as when manually pressed by the user.

In one example, the inlet terminal is made of a single polymer material, such as Acrylonitrile Butadiene Styrene (ABS), Polyethylene (PE), Polypropylene (PP), Polyvinyl chloride (PVC), Poly Styrene (PS), PolyEthylene Terephthalate (PET), Polybutylene terephthalate (PBT), or Polyamide (PA). Optionally, these material also comprises an anti-UV component at 0.1 - 0.5% of the total weight of the material. The person skilled in the art will understand that anti-UV components are additives provided to the material to provide UV stabilization through preventing photo-oxidation. The component can be a UV-absorber, a so called quencher, or a hindered amine light stabilizer, such as a component comprising a 2,2,6,6-tetramethylpiperidine ring structure.

Optionally, the terminal may be designed such that the plurality of cable ports debouch on the same face of the head, and wherein the cable gutters extend substantially parallel to each other. This allows the user to orient the head in such a manner that direct rain exposure of the face is lowest. This is particularly useful if the roof is slanted.

Lastly, the at least one cable port may comprise first ports of a first diameter, and a second ports of a second diameter smaller than the first diameter, and wherein preferably the first ports debouch centrally on said same face compared to the second ports. This is an intuitive design that prevents a user from accidentally fitting the smallest cables in the largest ports only to discover that the larger cables no longer fit into the terminal. It allows the suitability of a terminal for an additional cable of a particular size to be assessed by a mere glance.

According to a second aspect of the invention there is provided an assembly of a terminal according to the first aspect, and a cable duct for feeding electrical cables from solar panels through a roof.

According to a third aspect of the invention there is provided a roof, such as a slanted roof, comprising a cable duct provided with a terminal according to the first aspect.

Optionally, the roof comprises one or more cables extending through said roof via the terminal, wherein the number of cable ports exceeds the number of cables, wherein only those cable ports provided with a cable have their at least one manually removable breakaway portion pushed in or removed. This is the particular resulting arrangement in which allows for adaptive addition of another cable should one later decide to expand ones solar panel array while also keeping the duct shielded.

According to a fourth aspect of the invention there is provided a roofing tile, comprising the cable duct provided with a terminal according to the first aspect.

According to a fifth aspect of the invention there is provided a method for installing a cable through a roof according to the third aspect of the invention, wherein the method comprises the steps:
- providing a cable with a first cable diameter;
- connecting the cable duct with the inlet terminal;
- pushing at least one breakaway portion (5) of a cable port of the plurality of cable ports (3, 4) that is equal to or greater than said first cable diameter, making the opening of the port suitable for receiving said cable therethrough;
- inserting said cable through the roof via the terminal. It should be understood that this method also applies to roofs wherein the roof comprises roof tiles.

Optionally, the method also comprises a step of assembling the head, by connecting the a cover to said lower portion, wherein the step of pushing the at least one breakaway portion and the step of inserting the cable precede the assembly of the head.

The invention will hereinafter further be elucidated by means of reference to the figures:
- Fig. 1 shows an assembly of the invention with a roof portion;
- Fig. 2 shows a perspective view of the cover of the head of the inlet terminal according to the invention;
- Fig. 3 shows another perspective view of the cover of the head of the inlet terminal according to the invention;
- Fig. 4 shows a lower portion of the head of the inlet terminal according to the invention;
- Fig. 5 shows a cross-sectional portion of the lower portion of the head of the inlet terminal according to the invention;
- Fig. 6 shows a part of the lower portion of the head of the inlet terminal according to the invention;
- Fig. 7 shows a schematic representation of the invention comprising a cable.

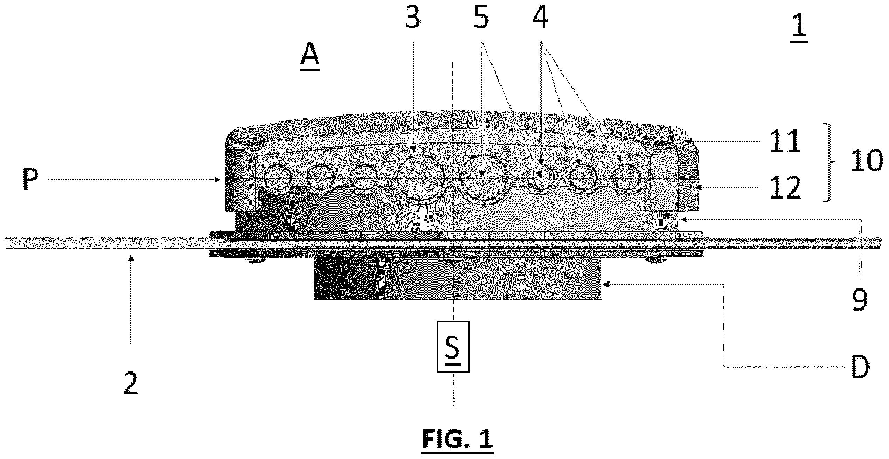

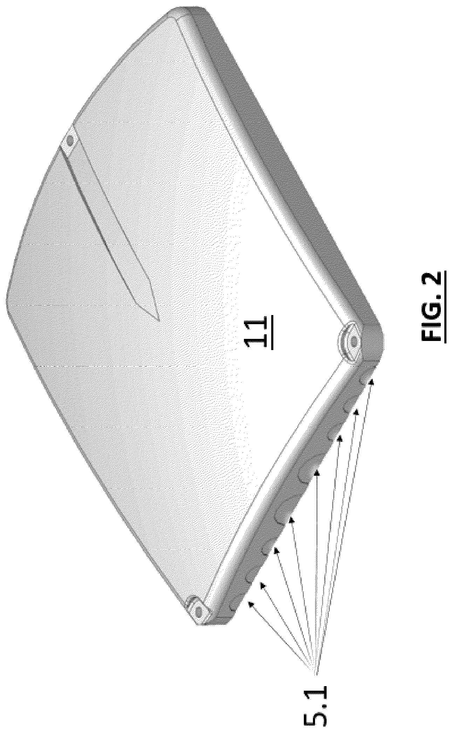

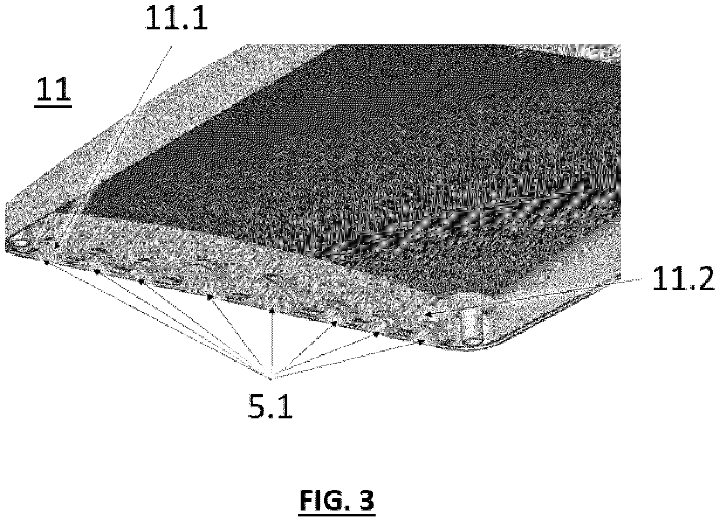

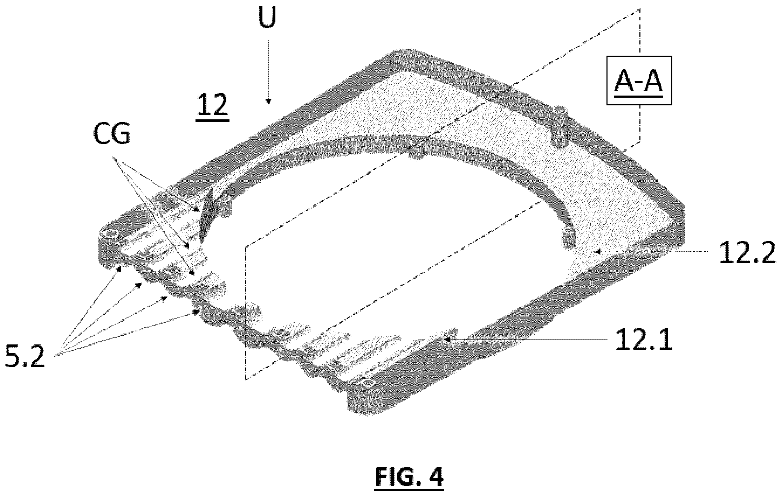

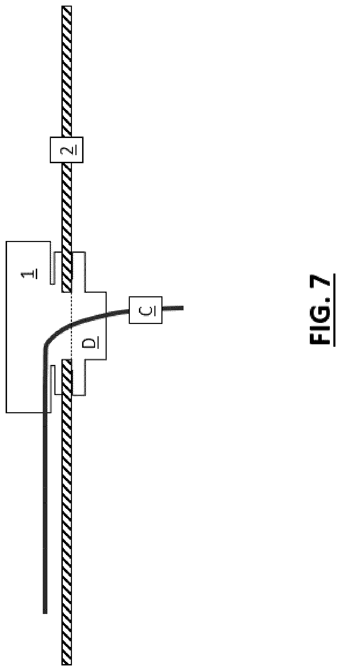

Figure 1 shows the inlet terminal 1 of a cable duct D for feeding electrical cables C, as seen from Figure 7, from solar panels through a roof 2. The terminal has a plurality of cable ports 3, 4 for receiving electrical cables therein. These are divided in first ports 3 and second ports 4. The first ports 3 have a larger diameter than the second ports so as to accommodate cables of different diameters. In practice the first port is suitable for AC cables, whereas the second ports are suitable for DC cables. The ports are all furnished on a single face A of a head 10 of the terminal and are arranged bigger to smaller from inside to outside. Each of the ports has at least one manually removable breakaway portion 5 for shielding an opening of said port. The head 10 is comprised of a cover 11 and a lower portion 12 so that a user doesn't have to pull a cable through an inlet port. Rather the user may disassemble the head and lay out the cables according to a desirable cable management strategy. The head is also separately from this example mirror symmetric along a mirror plane S such that half of the plurality of cable ports 3, 4 are one side, and the other half on the other side of said mirror plane. The cover 11 and lower portion 12 are designed to form a plane of connection P, wherein this plane P, preferably perpendicular to the mirror plane S, divides each of the breakaway portions 5 in a first portion 5.1 and second portion 5.2. The first portions 5.1 of the breakaway portions 5 are all integral with the cover 11, as can be seen in Figures 2 and 3, whereas the second portions 5.2 of the breakaway portions 5 are all integral with the lower portion 12 of the head 10, as can be seen in Figure 4.

Figure 3 shows that head comprises two consecutive upstanding walls 11.1, 11.2 each provided with a set of arches. The first portions being provided as port of the outer most wall 11.1 of these two walls 11.1, 11.2. These two consecutive upstanding walls are an additional feature, also separate from this example to prevent the incursion of water.

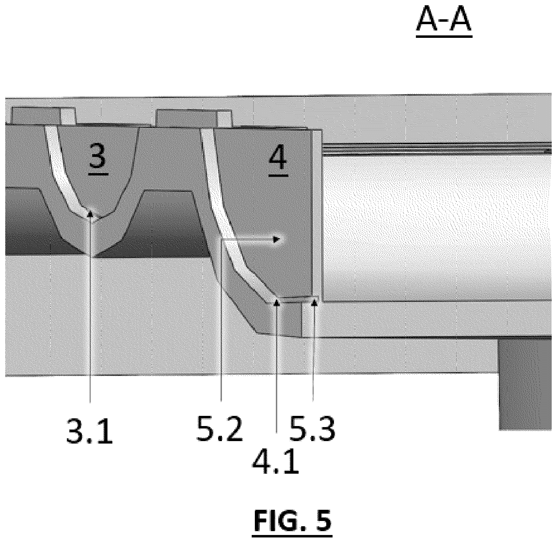

Figure 4 shows that the plurality of cable ports 3, 4 comprise cable gutters CG furnished on an upper face U of the lower portion (12), and wherein also separate from this example the gutters are provided within a raised ledge 12.1 within the inner surface 12.2 of the lower portion 12 of the head 10. The cable gutters also vary in length with cable gutter of the first ports 3 being the shortest in length, and the cable gutters of the second ports 4 being the longest. This beneficially allows smaller diameter cables to have the most support. Figure 4 also shows a cross-sectional plane A-A which is discussed hereinafter in reference to Figure 5.

Figure 5 shows that the at least one manually removable breakaway portion 5 can comprise a recess 5.3 so as to promote breaking along at least a portion of the inner contour 3.1, 4.1 of the corresponding cable port 3, 4. In this example of course the at least one manually removable breakaway portion 5 comprises a first and second portion 5.1, 5.2, wherein both are provided with such a recess 5.3.

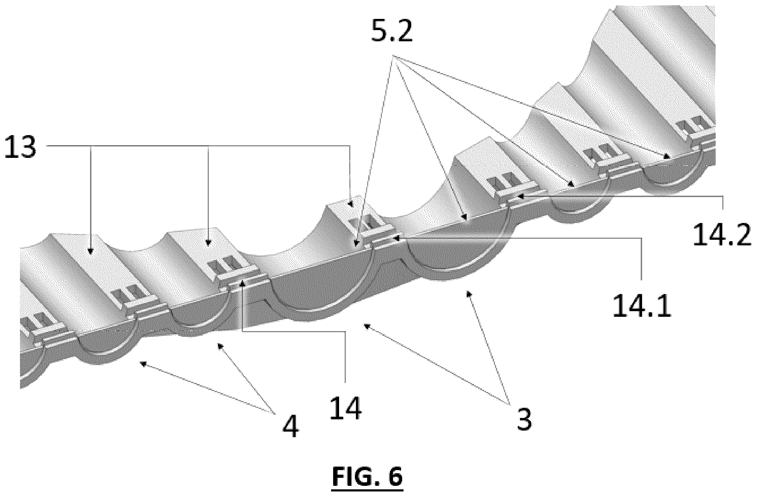

Figure 6 more specifically shows how that the ports 3, 4 are spaced from each other, and wherein the legs of the arches of walls 11.1, 11.2 fit with corresponding recesses 14.1, 14.2 provided in shoulders 14 between each of the ports 3, 4.

Figure 7 is very schematically shows how a cable C would extend through the roof 2.

## Claims

1. An inlet terminal (1) for a cable duct (D) for feeding electrical cables (C) from solar panels through a roof (2), comprising a plurality of cable ports (3, 4) for receiving electrical cables therein,
**characterized in that**
each port of the plurality cable ports (3, 4) comprises at least one manually removable breakaway portion (5) for shielding an opening of said port.

2. The terminal according to claim 1, wherein the terminal comprises
- a hollow base (9), defining an internal volume, such as for being placed over the cable duct, and/or for connecting the terminal to said roof (2) and
- a head (10) for shielding the internal volume of the hollow base (9) against rain and for guiding the cables.

3. The terminal according to claim 1 or 2, wherein the head (10) comprises a cover (11) and a lower portion (12) for being assembled to form said head (10), wherein the plurality of cable ports comprise cable gutters (CG) furnished on an upper face of the lower portion (12) of the head (10).

4. The terminal according to claim 3, wherein the at least one breakaway portion (5) comprises a first portion (5.1) integral with the cover (11), and a second portion (5.2) integral with the lower portion (12).

5. The terminal according to claim 4, wherein the cover and lower portion (11, 12) of the head (10), are designed to form a plane of connection (P), wherein this plane divides the breakaway portion (5) such that the first portion (5.1) and second portion (5.2) are substantially equal halves, preferably half circles.

6. The terminal according to claim 4 or 5, designed such that the upstanding edges of the first and second portions (5.1, 5.2) meet when the cover and lower portion (11, 12) are assembled to form the head (10).

7. The terminal according to any one of claims 4-6, wherein the manually removable breakaway portion comprises a recess (5.3), such as a curved recess, so as to promote breaking of the breakaway portion (5) along at least a portion of the inner contour (3.1, 4.1) of the corresponding cable port, such as when manually pressed by the user.

8. The terminal according to any one of claims 3-7, wherein the plurality of cable ports (3, 4) debouch on the same face (A) of the head (10), and wherein the cable gutters (2, 3) extend substantially parallel to each other.

9. The terminal according to claim 8, wherein the at least one cable port (3, 4) comprises first ports (3) of a first diameter, and a second ports of a second diameter (4) smaller than the first diameter, and wherein preferably the first ports (3) debouch centrally on said same face (A) compared to the second ports (4).

10. A roof (2), such as a slanted roof, comprising a cable duct provided with a terminal (1) according to any of claims 1-8.

11. A roof according to claim 10, comprising one or more cables extending through said roof via the terminal, wherein the number of cable ports (3, 4) exceeds the number of cables, wherein only those cable ports provided with a cable have their at least one manually removable breakaway portion pushed in or removed.

12. A roofing tile, comprising the cable duct provided with a terminal according to any one of claims 1-8.

13. A method for installing a cable through a roof according to claim 10, wherein the method comprises the steps:
- providing a cable ^{©} with a first cable diameter;
- connecting the cable duct with the inlet terminal;
- pushing at least one breakaway portion (5) of a cable port (4) of the plurality of cable ports (3, 4) that is equal to or greater than said first cable diameter, making the opening of the port suitable for receiving said cable ^{©} therethrough;
- inserting said cable through the roof via the terminal.

14. The method according to claim 11, and a terminal according to claim 3, comprising the step of assembling the head (10), by connecting the a cover (11) to said lower portion (12), wherein the steps of pushing the at least one breakaway portion and inserting the cable precede the assembly of the head.

15. The assembly of a terminal according to any one of claims 1-8, and a cable duct for feeding electrical cables (C) from solar panels through a roof.
